# EUROPEAN PATENT APPLICATION

(11) **EP 4 835 166 A1**
(43) Date of publication of application: **04.11.2026**
(21) Application number: 25210796.6
(22) Date of filing: 23.10.2025
(51) Int. Cl.: C25D 1/04, H01M 4/66, C25D 3/38

(54) **COPPER FOIL, AND ELECTRODE AND SECONDARY BATTERY INCLUDING THE SAME**

(30) Priority: 30.04.2025 KR 20250057674
(71) Applicant: SK Nexilis Co., Ltd., Jeollabuk-do 56137 (KR)
(72) Inventor: JIN, Shan Hua, 03142 Seoul (KR); KIM, Seokhun, 03142 Seoul (KR); KIM, Taeyeong, 03142 Seoul (KR)
(74) Representative: Prüfer & Partner mbB Patentanwälte · Rechtsanwälte

(57) **Abstract**

Provided are a copper foil and an electrode and secondary battery including the same, the copper foil including a copper layer, wherein the copper foil has a Martens hardness of 0.6 GPa to 1.0 GPa according to measurement conditions below based on ISO 14577:

[Measurement conditions]

- Measurement equipment: HM 2000 (Helmut Fischer)
- Load: 15 mN
- Load increase time and unload time: 10 sec
- Creep holding time: 3 sec
- Indenter type: Vickers

## Description

### BACKGROUND OF THE DISCLOSURE

### Field of the Disclosure

The present disclosure relates to a copper foil and an electrode and secondary battery including the same.\

### Description of the Related Art

A secondary battery, as an energy storage device, is widely used in various applications such as portable devices, electric vehicles, and energy storage systems (ESS). In particular, as high energy density and high power characteristics are simultaneously required, advanced technological development for the structures and constituent materials of electrodes is continuously ongoing.

Generally, a negative electrode is formed by applying a slurry composed of an active material, a binder, and a conductive agent onto a current collector, and then subjecting it to drying and roll-press processes. As the current collector, a copper foil, which has excellent electrical conductivity and is easy to process, is widely used.

Recently, as the demand for higher density and reduced thickness of electrodes has increased, design conditions such as an increase in the coating amount of an active material, an improvement in electrode density, and a reduction in electrode thickness are becoming progressively more advanced. Accordingly, various performance requirements such as mechanical durability, process adaptability, surface precision, and coating uniformity are being simultaneously imposed on copper foil.

In particular, during electrode manufacturing, the copper foil is repeatedly subjected to high-pressure roll press and the active material is repeatedly subjected to a compressive load, which may cause various process-related problems such as reduced mechanical stability, wrinkling, tearing, softening, and the generation of surface defects.

Therefore, as electrode manufacturing conditions become more advanced, research aimed at optimizing multifaceted characteristics of the copper foil, such as its thickness, crystal structure, surface roughness, chemical stability, and residual stress, is being actively conducted.

### SUMMARY OF THE DISCLOSURE

Therefore, the present disclosure has been made in view of the above problems, and it is one object of the present disclosure to provide a copper foil in which surface rigidity and elastic restoring force are secured in a balanced manner, thereby having improved mechanical properties and battery characteristics, and an electrode and a secondary battery including the copper foil.

In accordance with an aspect of the present disclosure, the above and other objects can be accomplished by the provision of a copper foil, including, a copper layer,
wherein the copper foil has a Martens hardness of 0.6 GPa to 1.0 GPa according to measurement conditions below based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

In an embodiment of the present disclosure, the copper foil may include one surface and another surface, wherein a difference between a Martens hardness on one surface of the copper foil and a Martens hardness on the other surface of the copper foil is 0.3 GPa or less.

In an embodiment of the present disclosure, the copper foil may have a Vickers hardness of 0.7 GPa to 1.5 GPa according to the measurement conditions.

In an embodiment of the present disclosure, the copper foil may have a Surface Rigidity Index (SRI) of 0.7 to 1.1 according to Equation 1 below: [Equation 1] $SRI = \left(Martens hardness+Vickers hardness\right) / 2$

In an embodiment of the present disclosure, the copper foil may have a plastic hardness of 0.9 GPa to 1.5 GPa according to the measurement conditions.

In an embodiment of the present disclosure, the copper foil may have an indentation elastic modulus of 15 MPa to 30 MPa according to the measurement conditions.

In an embodiment of the present disclosure, the copper foil may have a Mechanical Resilience Index (MRI) of 15 to 30 according to Equation 2 below: [Equation 2] $MRI \left(unit omitted\right) = Indentation elastic modulus / Plastic hardness$

In an embodiment of the present disclosure, the copper foil may include a protective layer formed on at least one surface of the copper layer, wherein the protective layer includes at least one of a chromium compound, a silane compound, and a nitrogen compound.

In accordance with another aspect of the present disclosure, there is provided an electrode, including: a current collector including a copper foil; and an active material layer formed on at least one surface of the current collector, wherein the copper foil includes a copper layer, and has a Martens hardness of 0.6 GPa to 1.0 GPa according to measurement conditions below based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

In accordance with yet another aspect of the present disclosure, there is provided a secondary battery, including: a negative electrode; a positive electrode; an electrolyte; and a separator interposed between the negative electrode and positive electrode, wherein the negative electrode includes a current collector including a copper foil, wherein the copper foil includes a copper layer, and has a Martens hardness of 0.6 GPa to 1.0 GPa according to the following measurement conditions based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 schematically illustrates the sectional view of a copper foil according to an embodiment;
FIG. 2 schematically illustrates the sectional view of a negative electrode according to an embodiment;
FIG. 3 schematically illustrates the sectional view of a secondary battery according to an embodiment; and
FIG. 4 schematically illustrates an apparatus for manufacturing a copper foil according to an embodiment.

### DETAILED DESCRIPTION OF THE DISCLOSURE

Structural or functional descriptions of embodiments disclosed in the present specification or application are merely illustrated for the purpose of explaining embodiments according to the technical idea of the present disclosure, embodiments according to the technical idea of the present disclosure may be implemented in various forms other than the embodiments disclosed in the present specification or application, and it is not to be construed that the technical idea of the present disclosure is limited to the embodiments described in the present specification or application.

In the specification, when a certain part "includes" a certain component, this indicates that the part may further include another component instead of excluding another component unless there is no different disclosure. In addition, it should be understood that all numerical ranges representing physical property values, dimensions, etc. of components described in the present specification or application are modified by the term 'about' in all cases unless otherwise specified. Further, in the present specification or application, 'ppm' means on a weight basis. Additionally, in the present specification or application, 'derived' means to indicate a component or structure originating from a certain substance, or the substance itself.

In addition, in the present specification or application, terms such as "below," "beneath," "lower," "above," and "upper" may be used to easily describe the correlation between one element or component and another, as illustrated in the drawings. The spatially relative terms should be understood as terms that include different orientations of a device during use or operation, in addition to the orientation shown in the drawings. For example, when a device shown in the drawings is turned over, a device described as "below" or "beneath" another device may be placed "above" the other device. Accordingly, the exemplary term "below" or "beneath" may encompass both orientations of below and above. Likewise, the exemplary term "above" or "upper" may encompass both orientations of above and below.

Hereinafter, a copper foil according to the present disclosure and an electrode and secondary battery including the copper foil are described.

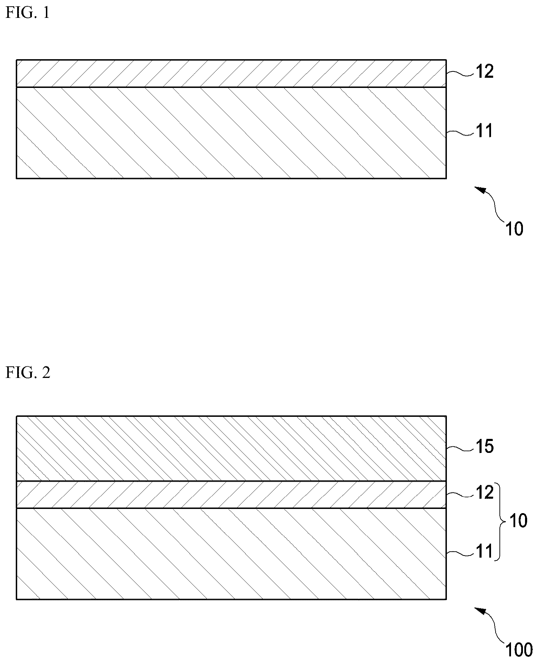

FIG. 1 schematically illustrates the sectional view of a copper foil according to an embodiment.

A copper foil 10 according to the present disclosure may include a copper layer 11. The copper layer 11 may include 99 % by weight or more, 99.3 % by weight or more, 99.6 % by weight or more, or 99.9 % by weight or more of copper (Cu).

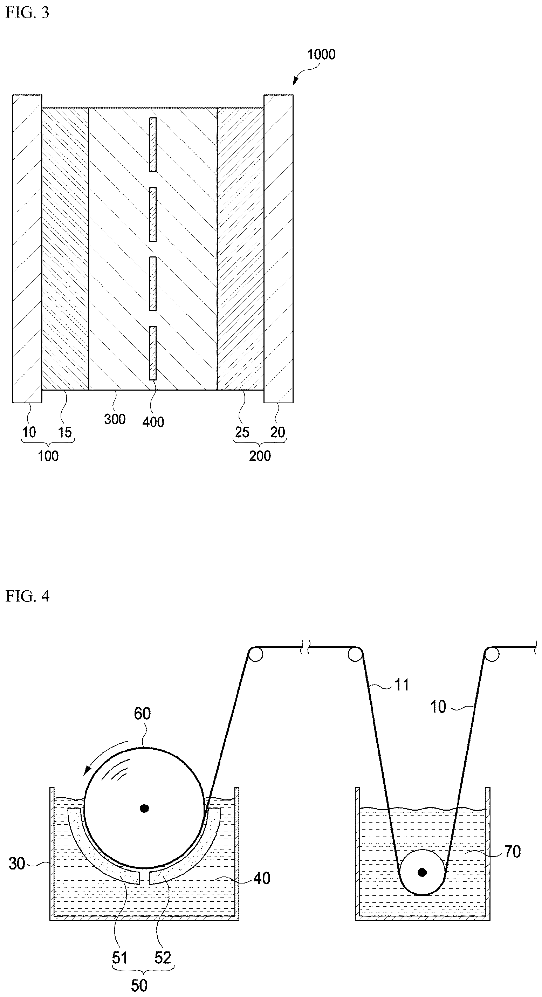

The copper layer 11 may be formed on a rotating cathode drum through electroplating. The copper layer 11 may include a shiny side that is in direct contact with the rotating cathode drum in the electroplating process and a matte side that is opposite thereto. Specifically, the copper layer 11 may be formed by a copper foil-manufacturing apparatus of FIG. 4 to be described below.

The copper layer 11 may include a metal chelating agent. A functional group included in the metal chelating agent may form a strong chelate bond with copper ions. The functional group may be an amino group and/or a hydroxy group. The amino group and/or the hydroxy group may be chelated with the copper ions to form a copper chelate complex. Since microcrystallines may be uniformly formed by the copper chelate complex, stress may be dispersed during thermal expansion of the copper layer 11. Since the copper ions may be prevented from agglomerating with impurities by the metal chelating agent, the recrystallization of the copper ions may be suppressed, so that thermal stability may be improved. The elastic modulus of the manufactured copper foil 10 may be controlled by the copper chelate complex. Since residual stress and interfacial stress on the copper foil 10 may be relieved by the copper chelate complex, Martens hardness to be described below may be improved.

The metal chelating agent may be derived from a component included in an electrolyte solution during a manufacturing process of the copper layer 11 to be described below. The metal chelating agent may be identified by Time-of-Flight Secondary Ion Mass Spectrometry (ToF-SIMS), X-ray Photoelectron Spectroscopy (XPS), and/or Fourier transform infrared spectroscopy (FT-IR).

The metal chelating agent may be at least one selected from the group consisting of chitosan, carboxymethyl chitosan, acetylated chitosan, polyethyleneimine, dendrimer, triethylenetetramine, glycine, citric acid, alginic acid, and pectin.

Preferably, the metal chelating agent may be chitosan including an amine group and a hydroxy group as functional groups.

The copper foil 10 may include a protective layer 12 formed on at least one surface of the copper layer 11. The protective layer 12 formed on one surface of the copper layer 11 is illustrated in FIG. 1, but the protective layer 12 may be formed on both surfaces of the copper layer 11.

The protective layer 12 may include at least one of a chromium compound, a silane compound, and a nitrogen compound. The protective layer 12 may prevent the oxidation and corrosion of the copper layer 11 and improve heat resistance thereof, thereby extending the lifespan of the copper foil 10 and the lifespan of a product including the copper foil 10.

The copper foil 10 may have a Martens hardness of 0.6 GPa to 1.0 GPa according to the following measurement conditions based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: VickersMartens hardness, which is also known as a Martin hardness, represents a combined elastic and plastic properties of a material in response to indentation.

The Martens hardness measurement may be performed in accordance with ISO 14577-1 using a HM 2000 instrument (Helmut Fischer) equipped with a Vickers diamond indenter. The test load is set to 15 mN, applied with a load increase time of 10 seconds, followed by a creep holding time of 3 seconds at maximum load, and an unloading time of 10 seconds. The indentation depth is continuously recorded during loading and unloading to calculate Martens hardness, which accounts for both elastic and plastic deformation behavior of the copper foil surface. The maximum indentation depth is controlled to remain below 10% of the copper foil thickness to prevent substrate influence. Surface preparation includes polishing and cleaning to ensure measurement accuracy. Data acquisition settings include a high sampling rate and resolution to capture the detailed load-displacement response. The indentation elastic modulus and indentation hardness are calculated based on the unloading curve slope and maximum load/displacement values respectively. Calibration of the instrument and indenter is performed regularly according to ISO 14577-2 to ensure measurement accuracy and reproducibility.

Environmental conditions such as ambient temperature and humidity are maintained within specified limits (e.g., 23±2°C and 50±5% RH) during testing. Multiple indentations are performed at designated locations on the specimen, and the average value is calculated.

The range of Martens hardness according to the measurement conditions may be an index indicating the local mechanical hardness and deformation resistance of the surface of the copper foil 10. The range of the Martens hardness may be an index indicating the tensile strength retention and fracture resistance of the copper foil 10 in room-temperature and high-temperature environments. The range of the Martens hardness may be an index indicating the elongation stability and ductility security of the copper foil 10 in room-temperature and high-temperature environments. The range of the Martens hardness may be an index indicating mechanical reliability with which an electrode including the copper foil 10 withstands an electrode manufacturing and assembly process involving repetitive bending stress, compressive stress, and tensile stress without fracture. The range of the Martens hardness may be an index indicating a characteristic that a secondary battery to which the copper foil 10 is applied may be stably maintained without structural destruction or interfacial delamination during a long-term charge/discharge cycle.

The Martens hardness may be controlled depending upon the composition of an electrolyte solution, the content of each composition, and manufacturing process conditions in a manufacturing process of a copper foil to be described below.

The Martens hardness may be 0.6 GPa to 1.0 GPa, 0.63 GPa to 1.0 GPa, 0.63 GPa to 0.95 GPa, or 0.63 GPa to 0.9 GPa. When the range is satisfied, tensile strength and elongation may be excellently maintained in room-temperature and high-temperature environments, and fracture or cracking of the copper foil may be suppressed.

The Martens hardness may be a measurement result of the matte side of the copper foil 10. The Martens hardness may be a measurement result of the shiny side of the copper foil 10.

The copper foil 10 may include one surface and the other surface, and a difference between the Martens hardness on one surface of the copper foil and the Martens hardness on the other surface of the copper foil may be 0.3 GPa or less, 0.25 GPa or less, 0.20 GPa or less, 0.18 GPa or less, or 0.10 GPa or less. The one surface of the copper foil 10 may be the matte side, and the other surface of the copper foil 10 may be the shiny side. The shiny side of copper foil refers to the surface that contacts the titanium drum during the electrolytic copper plating process. This side closely follows the surface shape of the drum, resulting in a very smooth and glossy surface. The shiny side can be used as the side that comes into contact with the active material in applications such as the negative electrode collector in batteries.

The matte side is the opposite side to the shiny side in electrolytic copper foil. It is the back surface of the foil, characterized by low gloss, rough texture, and an opaque appearance. The matte side plays an important role in post-processing such as coating and adhesion, and it is often roughened to improve adhesion properties.

When the range is satisfied, both surfaces of the copper foil 10 may have similar mechanical properties, so that a difference in performance due to surface selection during electrode manufacturing may be reduced. As a result, the mechanical stability of an electrode structure and the uniformity of an interfacial adhesive force may be improved.

The copper foil 10 may have a Vickers hardness of 0.7 GPa to 1.5 GPa, 0.75 GPa to 1.5 GPa, 0.78 GPa to 1.5 GPa, or 0.78 GPa to 1.4 GPa under the same measurement conditions as the Martens.

Vickers hardness is a traditional hardness value defined by the ratio of the applied test load to the surface area of the residual indentation left by a diamond pyramid after unloading, that is, overall resistance to permanent (plastic) deformation is measured. In contrast, Martens hardness is an instrumented indentation hardness defined as the applied load divided by the instantaneous contact area between the indenter and the material during loading, reflecting both elastic and plastic deformation.

The copper foil 10 may have a plastic hardness of 0.9 GPa to 1.5 GPa, 0.95 GPa to 1.5 GPa, 0.95 GPa to 1.45 GPa, or 0.95 GPa to 1.4 GPa under the same measurement conditions as the Martens hardness. The plastic hardness is resistance to plastic deformation under maximum load.

The copper foil 10 may have an indentation elastic modulus of 15 MPa to 30 MPa, 17 MPa to 30 MPa, 18 MPa to 30 MPa, or 18 MPa to 28 MPa under the same measurement conditions as the Martens hardness. The indentation elastic modulus is elastic stiffness of material under indentation.

When the range is satisfied, interfacial stress dispersion between the copper foil 10 and an active material layer is smoothly performed, so that delamination and separation of an active material may be suppressed, and thus cycle characteristics and lifespan of a secondary battery may be improved. In addition, even when pressure or impact is continuously applied to the copper foil 10, the copper foil 10 may be elastically deformed, so that fine cracks and a peeling phenomenon in the copper foil 10 may be suppressed.

The copper foil 10 may have a Surface Rigidity Index (SRI) of 0.7 to 1.1 according to Equation 1 below: [Equation 1] $SRI = \left(Martens hardness+Vickers hardness\right) / 2$

SRI may be an index indicating a balance between elasticity and plastic hardness of the copper foil 10.

SRI may be 0.7 to 1.1, 0.71 to 1.1, 0.71 to 1.09, or 0.71 to 1.08. When the range is satisfied, stability against an external force generated during an assembly or rolling process of an electrode including the copper foil 10 may be improved, so that the structural stability of a secondary battery may be improved.

The copper foil 10 may have a Mechanical Resilience Index (MRI) of 15 to 30 according to Equation 2 below. [Equation 2] $MRI \left(unit omitted\right) = Indentation elastic modulus / Plastic hardness$

MRI may be an index indicating a restoring force of the copper foil 10 against an external load.

The MRI is defined as the ratio between the indentation elastic modulus and the indentation hardness of the copper foil. This parameter represents an indicator of the foil's resilience to external mechanical stress, specifically quantifying its ability to elastically recover after deformation. While this parameter is unconventional, it provides insight into the copper foil's mechanical behavior by combining elastic and plastic deformation properties. The indentation elastic modulus corresponds to the material's resistance to reversible deformation, whereas the indentation hardness reflects irreversible deformation resistance.

The MRI may be conducted under controlled conditions using instrumented indentation techniques according to ISO 14577. The testing method includes applying a defined load with a calibrated indenter and measuring the load-displacement response. The MRI parameter thus offers a meaningful composite measure of the copper foil's capability to withstand and recover from mechanical loads, which is critical for its performance as a battery current collector.

MRI may be 15 to 30, 15 to 28, 15 to 26, or 15 to 25. The MRI represents the balance between elastic stiffness and plastic resistance of the copper foil 10. When the range is satisfied, the copper foil 10 may have mechanical elasticity that can be restored without permanent deformation under repeated bending or compressive stress. Accordingly, the structural stability and cycle characteristics of a secondary battery may be improved.

FIG. 2 schematically illustrates the sectional view of a negative electrode according to an embodiment.

An electrode according to the present disclosure may include a current collector including the copper foil 10; and an active material layer formed on at least one surface of the current collector.

The electrode may be a negative electrode 100. The active material layer may be a negative electrode active material layer 15.

The copper foil 10 may include a copper layer 11, and may have a Martens hardness of 0.6 GPa to 1.0 GPa according to the following measurement conditions based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

The copper foil 10 may include a protective layer 12 formed on at least one surface of the copper layer 11. The copper foil, the copper layer, the protective layer, and the Martens hardness may be the same as the copper foil, copper layer, protective layer, and Martens hardness described above.

In FIG. 2, the protective layer 12 and negative electrode active material layer 15 formed on one surface of the copper layer 11 are illustrated, but the protective layer 12 and the negative electrode active material layer 15 may be formed on both surfaces of the copper layer 11.

A ratio of the thickness of the current collector to the total thickness of the electrode may be 1 % to 12 %, 3 % to 12 %, 5 % to 12 %, or 6 % to 12 %. When the range is satisfied, the mechanical support of the negative electrode active material layer 15 may be maintained, and energy density may be improved.

The negative electrode active material layer 15 may include a negative electrode active material.

The type of the negative electrode active material is not particularly limited, and a compound capable of reversible intercalation and deintercalation of lithium may typically be used. For example, carbonaceous materials such as artificial graphite, natural graphite, graphitized carbon fiber, amorphous carbon, and highly crystalline carbon; or metallic compounds capable of alloying with lithium such as Si, Al, Sn, Pb, Zn, Bi, In, Mg, Ga, Cd, a Si alloy, a Sn alloy, or an Al alloy may be used. Examples of low-crystalline carbon may include soft carbon and hard carbon, and examples of high-crystalline carbon may include high-temperature fired carbons such as natural graphite, kish graphite, pyrolytic carbon, mesophase pitch based carbon fiber, meso-carbon microbeads, mesophase pitches, and petroleum or coal tar pitch derived cokes. As the negative electrode active material, a composite including a metallic compound and a carbonaceous material may be used as needed.

The negative electrode active material may be mixed with a binder and a conductive agent to be formed as the negative electrode active material layer 15.

The binder may improve the binding force between the negative electrode active material and a conductive agent, and may improve the binding force between the negative electrode active material layer 15 and the copper foil 10.

The type of binder is not particularly limited, but for example, polyvinylidene fluoride (PVDF), polytetrafluoroethylene (PTFE), fluorine rubber, styrene-butadiene rubber (SBR), cellulose-based resin, and the like may be used.

The conductive agent may improve the conductivity of the negative electrode active material. The type of conductive agent is not particularly limited, but for example, Super-P, graphite, acetylene black, and the like may be used.

The electrode may include a primer layer disposed between the copper foil 10 and the negative electrode active material layer 15.

The primer layer may improve the interfacial adhesion between the copper foil 10 and the negative electrode active material layer 15.

The primer layer may include a thickener. The thickener may include at least one selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum.

The primer layer may include a binder. The binder may include at least one selected from the group consisting of styrene-butadiene rubber, polyvinylidene fluoride, polyvinyl alcohol, starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluorine rubber, styrene (styrene monomer: SM), butadiene (BD), and butyl acrylate (BA).

The primer layer may include at least one conductive agent selected from the group consisting of natural graphite, artificial graphite, carbon black, acetylene black, Ketjen black, channel black, furnace black, lamp black, thermal black, carbon fiber, metal fiber, fluorocarbon, aluminum powder, nickel powder, zinc oxide, potassium titanate, titanium oxide, and polyphenylene derivatives to improve conductivity.

FIG. 3 schematically illustrates the sectional view of a secondary battery according to an embodiment.

The secondary battery 1000 according to the present disclosure may include a negative electrode 100, a positive electrode 200, an electrolyte 300, and a separator 400 interposed between the negative electrode 100 and the positive electrode 200, the negative electrode 100 may include a current collector including the copper foil 10, and the copper foil 10 may include a copper layer and have a Martens hardness of 0.6 GPa to 1.0 GPa according to the following measurement conditions based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

The negative electrode 100 and the Martens hardness may be the same as the negative electrode and Martens hardness described above.

The positive electrode 200 may include a structure in which a positive electrode active material layer 25 is formed on a positive electrode current collector 20.

The positive electrode 200 may be manufactured by a general method known in the art. For example, the positive electrode 200 may be manufactured by preparing a slurry by mixing and stirring a positive electrode active material, a solvent, a binder, a conductive agent, and a dispersant, and then applying the slurry onto the positive electrode current collector 20, compressing, and drying.

The positive electrode current collector 20 is a metal with high conductivity and is not particularly limited as long as it is a metal to which the slurry of the positive electrode active material can easily adhere and which has high conductivity without causing a chemical change in the secondary battery. For example, stainless steel, aluminum, nickel, titanium, sintered carbon, or a surface-treated material thereof with carbon, nickel, titanium, silver, or the like on the surface of aluminum or stainless steel may be used. In addition, fine irregularities may be formed on the surface of the positive electrode current collector to increase the adhesion of the positive electrode active material. The positive electrode current collector 20 may be used in various forms such as a film, a sheet, a foil, a net, a porous body, a foam, and a non-woven fabric body, and may have a thickness of 3 µm to 500 µm.

The positive electrode active material is a compound capable of reversible intercalation and deintercalation of lithium, and specifically, may include a lithium composite metal oxide including lithium and at least one metal such as cobalt, manganese, nickel, or aluminum.

The electrolyte 300 may be a non-aqueous electrolyte. The electrolyte 300 may include a lithium salt and an organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

The separator 400 may be configured to prevent an electrical short circuit between the negative electrode 100 and the positive electrode 200 and to allow a flow of ions. The separator 400 may include a porous polymer film or a porous non-woven fabric. Here, the porous polymer film may be composed of a single layer or multiple layers including a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fibers and polyethylene terephthalate fibers. However, the present disclosure is not limited thereto, and according to an embodiment, the separator may be a high-heat-resistance separator including ceramic (CCS; Ceramic Coated Separator).

A contact angle between the negative electrode 100 and the electrolyte 300 may be 50° or less, 45° or less, 40° or less, or 10° to 50°. The contact angle may be measured according to ASTM D7334. When the range is satisfied, the surface wettability of the negative electrode 100 is excellent, so that the uniformity of a Solid Electrolyte Interphase (SEI) layer may be improved, and the initial power characteristics and life stability of the secondary battery 1000 may be improved.

A composition for preparing a copper foil according to the present disclosure may include copper ions, an inorganic acid, a gloss agent, a crystal growth regulator including a thiourea derivative, and a leveling agent.

The gloss agent may impart a surface gloss, stress reduction, and leveling function to the copper layer 11.

The gloss agent may increase the charge amount of the electrolyte solution 40, so that the electrodeposition speed of the copper ions may increase, the curl characteristics of the manufactured copper foil 10 may be improved, and the gloss of the copper foil 10 may be improved.

The concentration of the gloss agent may be 1 ppm to 15 ppm, 1 ppm to 14 ppm, 1 ppm to 13 ppm, or 1 ppm to 12 ppm. When the range is satisfied, the surface roughness of the manufactured copper foil 10 may be maintained, and the gloss may be improved.

The gloss agent may include sulfonic acid or a metal salt thereof.

The gloss agent may include at least one selected from the group consisting of bis-(3-sulfopropyl)-disulfide disodium salt, diethylenetriaminepenta(methylenesulfonic acid), 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

By the crystal growth regulator including the thiourea derivative, the crystal grains of the copper layer 11 may be formed finely and uniformly. Specifically, the thiourea derivative may control the growth of crystal grains in the electrolyte solution, which will be described below, through a sulfur atom and amine group in its structure. This may promote the polynucleation of copper crystals and suppress the growth of specific crystal planes, whereby the crystal grains of the copper layer 11 may be formed finely and uniformly.

The concentration of the crystal growth regulator may be 0.2 ppm to 2 ppm, 0.2 ppm to 1.9 ppm, 0.2 ppm to 1.8 ppm, or 0.2 ppm to 1.7 ppm. When the range is satisfied, the surface roughness of the manufactured copper foil 10 is maintained, so that the flatness may be improved.

The thiourea derivative may be selected from the group consisting of N,N'-dimethylthiourea, N-methylthiourea, phenylthiourea, benzylthiourea, and alkylthiourea.

A content ratio of the gloss agent:crystal growth regulator may be 3.27:1 to 1.35:1. When the range is satisfied, the generation of pinholes in the manufactured copper foil 10 may be suppressed, and changes in tensile strength and elongation at room temperature and high temperature may be minimized.

By the leveling agent, excessive electrodeposition of copper ions may be prevented, and the flatness of the copper layer 11 may be improved.

The concentration of the leveling agent may be 1 ppm to 10 ppm, 1 ppm to 9.5 ppm, 1 ppm to 9 ppm, or 1 ppm to 8 ppm. When the range is satisfied, the electrodeposition uniformity and surface flatness of the manufactured copper foil 10 may be improved.

The leveling agent may include at least one of a Janus Green B derivative, dimethyldithiocarbamate (DMDTC), an imidazole derivative, and a polyquaternary ammonium-based compound.

The polyquaternary ammonium-based compound may include at least one of compounds represented by Formulas 1 to 5 below:

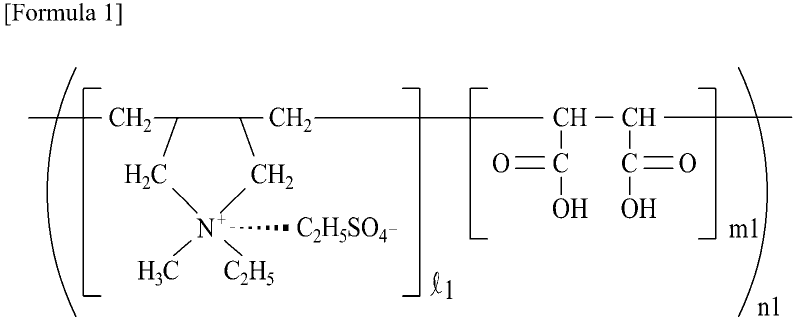

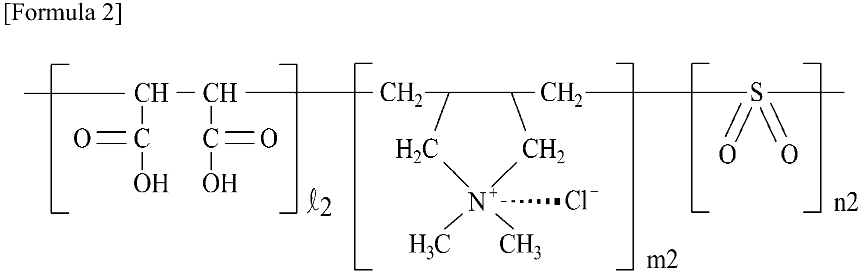

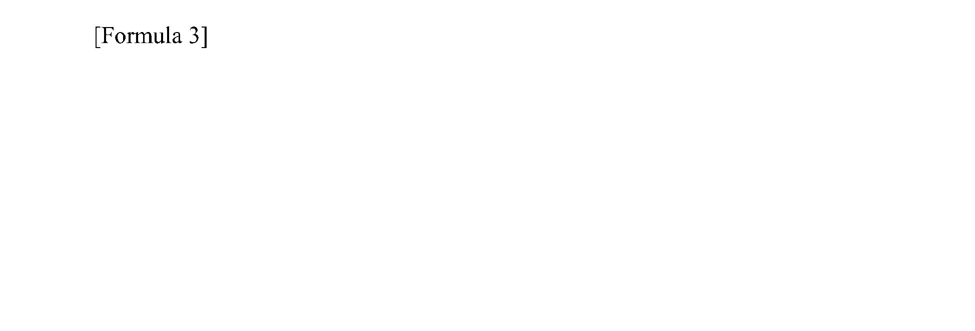

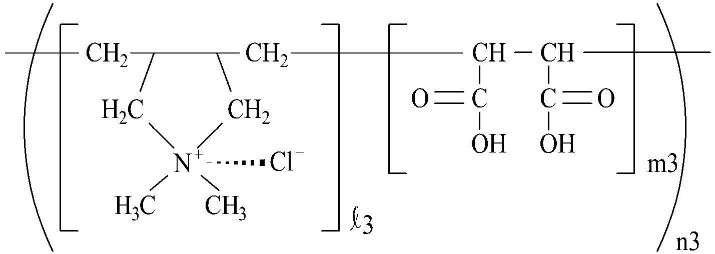

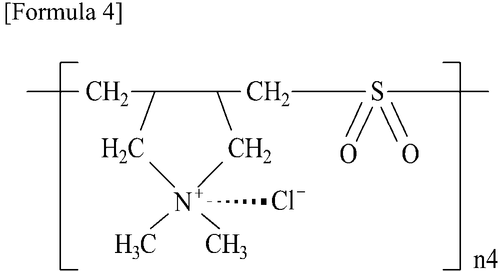

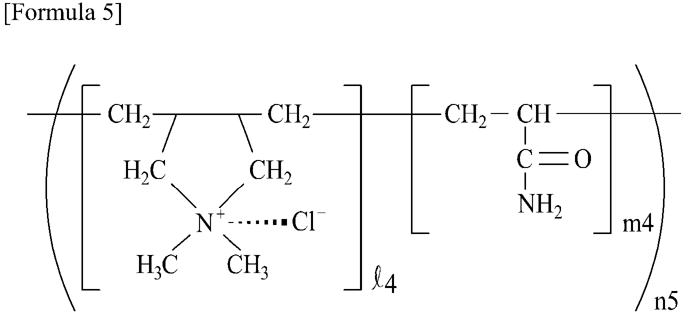

In Formulas 1 to 5, ℓ1 to ℓ4, m1 to m4, and n1 to n5 each represent a repeating unit, are integers of 1 or more, and may be the same as or different from each other.

Each of the compounds represented by Formulas 1 to 5 may have a number average molecular weight of 500 g/mol to 12,000 g/mol. When the range is satisfied, an increase in a surface roughness deviation may be suppressed, so that the gloss and flatness of the copper layer 11 may be improved.

The compounds represented by Formulas 1 to 5 may be prepared by polymerization or copolymerization using Diallyl Dimethyl Ammonium Chloride (DDAC). The compound represented by Formula 1 may be PAS-2451 (Mw 30,000 g/mol, from Nittobo). The compound represented by Formula 2 may be PAS-84 (Mw 20,000 g/mol, from Nittobo). The compound represented by Formula 3 may be PAS-2351 (Mw 25,000 g/mol, from Nittobo). The compound represented by Formula 4 may be PAS-A-1 (Mw 5,000 g/mol, from Nittobo), or PAS-A-5 (Mw 4,000 g/mol, from Nittobo). The compound represented by Formula 5 may be PAS-J-81 (Mw 180,000 g/mol, from Nittobo).

A composition for manufacturing the copper foil may be the same as the electrolyte solution to be described below.

FIG. 4 schematically illustrates an apparatus for manufacturing a copper foil according to an embodiment.

The copper foil 10 according to the present disclosure may be manufactured by the apparatus for manufacturing a copper foil.

The method of manufacturing the copper foil 10 may include a step of forming the copper layer 11 and a step of forming a protective layer 12 on the copper layer 11.

The apparatus for manufacturing the copper foil 10 may include an electrolytic bath 30 for containing an electrolyte solution 40, a positive electrode plate 50 including a first positive electrode plate 51 and a second positive electrode plate 52, and a rotating cathode drum 60.

The first positive electrode plate 51 and the second positive electrode plate 52 may be electrically insulated from each other.

The formation of the copper layer 11 may be carried out by forming a seed layer through energization between the first positive electrode plate 51 and the rotating cathode drum 60, and growing the seed layer through energization between the second positive electrode plate 52 and the rotating cathode drum 60.

A current density provided by each of the first positive electrode plate 51 and the second positive electrode plate 52 may be 40 ASD to 130 ASD, 45 ASD to 130 ASD, 45 ASD to 125 ASD, or 45 ASD to 120 ASD. When the range is satisfied, the formation of the negative electrode active material layer 15 on the copper foil 10 may be smoothly performed, and sufficient adhesive force may be imparted between the copper foil 10 and the negative electrode active material layer 15.

The surface characteristics of the copper layer 11 may be controlled according to the degree of surface buffing or polishing of the rotating cathode drum 60. For example, the surface of the rotating cathode drum 60 may be polished with a polishing brush having a grit of #800 to #3000.

During the formation process of the copper layer 11, the temperature of the electrolyte solution 40 may be maintained at 45 °C to 65 °C, 47 °C to 65 °C, 47 °C to 63 °C, or 47 °C to 60 °C. Depending on the temperature of the electrolyte solution 40, the size, crystal orientation, and electrodeposition rate of copper crystal grains may vary, and thereby the mechanical properties and surface roughness of the copper layer 11 may be controlled.

The electrolyte solution 40 may include copper ions, an inorganic acid, and an additive. The electrolyte solution 40 may include chlorine. The inorganic acid may include sulfuric acid.

The content of the copper ions in the electrolyte solution 40 may be 70 g/L to 150 g/L, 70 g/L to 110 g/L, 70 g/L to 100 g/L, or 70 g/L to 90 g/L.

The copper ions contained in the electrolyte solution 40 may be from a copper wire with a purity of 99.9% or more, which is pickled in 10% sulfuric acid for 10 to 20 minutes and then undergoes a water washing process with distilled water. The water washing process may prevent the pickled organic matter from entering the electrolyte solution 40. The concentration of the organic matter may be controlled by a filtration process using a medium such as diatomaceous earth or carbon.

The content of the sulfuric acid in the electrolyte solution 40 may be 80 to 130 g/L, 85 to 130 g/L, 90 to 130 g/L, or 90 to 125 g/L.

The chlorine may include chlorine ions and chlorine atoms. The chlorine may be used to remove silver (Ag) ions that have entered the electrolyte solution 40 during the process of forming the copper layer 11. The chlorine may precipitate the silver ions in the form of silver chloride (AgCl). The silver chloride may be removed by filtration.

The concentration of the chlorine may be 15 ppm to 30 ppm. When the range is satisfied, the removal of silver ions may be smoothly performed, and unnecessary reactions due to excess chlorine may be suppressed.

The additive may include the aforementioned gloss agent, a crystal growth regulator containing a thiourea derivative, and a leveling agent.

The additive may include a first additive that can provide functions of relaxing the deposition rate of the copper layer 11 and improving the uniformity thereof.

The first additive may prevent a sharp increase in roughness of the copper layer 11 and a decrease in strength thereof.

The concentration of the first additive may be 0.1 ppm to 20 ppm, 0.1 ppm to 15 ppm, 0.1 ppm to 12 ppm, or 1 ppm to 10 ppm. When the range is satisfied, the manufactured copper foil 10 may be prevented from being wrinkled and torn, and its appearance, gloss, strength, and elongation properties may be maintained.

The first additive may include a non-ionic water-soluble polymer.

The first additive may include at least one of hydroxyethyl cellulose, hydroxypropyl cellulose, ethyl cellulose, carboxymethyl cellulose, hydroxypropyl methyl cellulose, methyl cellulose, polyethylene glycol, polyvinyl alcohol, polypropylene glycol, polyacrylamide, polyoxyethylene, polyvinylpyrrolidone, polyethylene-polypropylene copolymers, polyglycerin, polyethylene glycol dimethyl ether, stearic acid polyglycol ether, and stearyl alcohol polyglycol ether.

The additive may include a second additive for the surface uniformity of the copper layer 11.

The second additive may include a metal chelating agent.

The content of the metal chelating agent may be 0.5 ppm to 3 ppm, 0.8 ppm to 3 ppm, 1 ppm to 3 ppm, or 1.2 ppm to 3 ppm based on the total weight of the composition for preparing a copper foil. When the range is satisfied, the uniformity of the copper foil 10 may be improved, and the generation of bubbles on the surface of the copper foil 10 may be suppressed. In addition, since the concentration of copper ions is uniform, the plating speed of the copper ions may be increased, and the current efficiency of the manufactured secondary battery 1000 may be improved.

The electrolyte solution 40 may include a copper chelate complex. The copper chelate complex may be formed by a chelate bond between the copper ions and the metal chelating agent.

The content of hydrogen peroxide (H₂O₂) in the electrolyte solution 40 may be 1 ml/L to 10 ml/L, 1 ml/L to 9.5 ml/L, 1 ml/L to 9.2 ml/L, or 1 ml/L to 9 ml/L.

The concentration of silver (Ag) in the electrolyte solution 40 may be 0.1 ppm to 10 ppm, 0.1 ppm to 9.5 ppm, 0.1 ppm to 9 ppm, or 0.1 ppm to 8 ppm.

The concentration of cerium (Ce) in the electrolyte solution 40 may be 2 ppm to 10 ppm, 2 ppm to 9.5 ppm, 2 ppm to 9 ppm, or 2 ppm to 8 ppm.

The concentration of lead (Pb) in the electrolyte solution 40 may be 1 ppm to 20 ppm, 1 ppm to 19 ppm, 1 ppm to 18 ppm, or 1 ppm to 15 ppm.

The concentration of molybdenum (Mo) in the electrolyte solution 40 may be 25 ppm or less, 20 ppm or less, 15 ppm or less, or 0.1 ppm to 25 ppm.

The concentration of nickel (Ni) in the electrolyte solution 40 may be 15 ppm to 150 ppm, 15 ppm to 130 ppm, 15 ppm to 120 ppm, or 15 ppm to 100 ppm.

The concentration of tungsten (W) in the electrolyte solution 40 may be 0.3 ppm to 5 ppm, 0.3 ppm to 4.5 ppm, 0.3 ppm to 4.2 ppm, or 0.3 ppm to 4 ppm.

The concentration of cobalt (Co) in the electrolyte solution 40 may be 330 ppm or less, 320 ppm or less, 300 ppm or less, or 100 ppm to 330 ppm.

The concentration of iron (Fe) in the electrolyte solution 40 may be 300 ppm or less, 280 ppm or less, 250 ppm or less, or 0.1 ppm to 300 ppm.

The concentration of arsenic (As) in the electrolyte solution 40 may be 0.5 ppm to 5 ppm, 0.5 ppm to 4.5 ppm, 0.5 ppm to 4.2 ppm, or 0.5 ppm to 4 ppm.

The concentrations of silver, cerium, lead, molybdenum, nickel, tungsten, cobalt, iron and arsenic described above include all atoms present in ions and molecules.

When the range is satisfied, the stress concentration on the local surface of the copper foil 10 may be reduced, and the bonding reliability and interfacial stability between the copper foil 10 and the active material layer may be improved. As a result, the Martens hardness according to the aforementioned measurement conditions may satisfy the range of 0.6 GPa to 1.0 GPa

When forming the copper layer 11, the flow rate of the electrolyte solution 40 supplied into the electrolytic bath 30 may be 35 m³/hour to 46 m³/hour, 37 m³/hour to 46 m³/hour, 39 m³/hour to 46 m³/hour, or 41 m³/hour to 45 m³/hour. When the range is satisfied, the electrolyte solution 40 is filtered during the circulation process of the electrolyte solution 40, so that solid impurities present in the electrolyte solution 40 may be removed while electroplating for forming the copper layer 11 is being performed.

A flow rate deviation of the electrolyte solution 40 may be controlled to be 5% or less, 4% or less, 3% or less, or 2% or less per unit time (second). When the range is satisfied, the copper layer 11 may be uniformly formed, and a deviation in the weight of the manufactured copper foil 10 may be minimized.

To remove impurities from the surface of the copper layer 11, water washing may be performed in a washing tank. To remove impurities from the surface of the copper layer 11, acid cleaning may be performed, and then water cleaning may be performed to remove the acidic solution used for the acid cleaning.

The method of manufacturing the copper foil 10 may include a step of forming a protective layer 12 on the copper layer 11. The copper layer 11 may be immersed in an anticorrosion solution 70. The copper layer 11 may be guided by a guide roll disposed in the anticorrosion solution 70 when being immersed in the anticorrosion solution 70.

The anticorrosion solution 70 may include at least one of a chromium compound, a silane compound, and a nitrogen compound. When forming the protective layer 12 on the copper layer 11, a method of immersing the copper layer 11 in a potassium dichromate solution of 1 g/L to 10 g/L at room temperature for 1 to 30 seconds may be performed. The protective layer 12 may include a silane compound by silane treatment, and may include a nitrogen compound by nitrogen treatment. The copper foil 10 may be manufactured by forming the protective layer 12.

Hereinafter, the present disclosure is described in more detail based on Examples and Comparative Examples. However, the following Examples and Comparative Examples are only examples for explaining the present disclosure in more detail, and the present disclosure is not limited by the following Examples and Comparative Examples.
- Gloss agent #1: Bis-(3-sulfopropyl)-disulfide disodium salt (SPS)
- Gloss agent #2: 3-mercapto-1-propanesulfonic acid (MPS)
- Crystal growth regulator: N,N'-dimethylthiourea (CAS 534-13-4)

### Examples

### Example 1

A copper foil was manufactured using a foil-making machine including an electrolytic bath 30, a rotating cathode drum 60 disposed in the electrolytic bath 30, and a positive electrode plate 50 disposed apart from the rotating cathode drum 60.

The electrolyte solution 40 was a copper sulfate solution, the concentration of copper ions in the electrolyte solution 40 was 87 g/L, the concentration of sulfuric acid was 110 g/L, and the temperature of the electrolyte solution 40 was set to 55 °C and the current density of the electrolyte solution 40 was set to 60 ASD (A/dm²). In addition, the concentration of chlorine (Cl) contained in the electrolyte solution 40 was maintained at 20 ppm.

5 ppm of polyethylene glycol (PEG) and 5 ppm of Janus Green B were contained in the electrolyte solution 40. In addition, 2.7 ppm of the gloss agent #1 and 2 ppm of the crystal growth regulator were contained in the electrolyte solution 40. Here, a content ratio of the gloss agent #1 to the crystal growth regulator was 1.35:1.

A current was applied between the rotating cathode drum 60 and the positive electrode plate 50 with a current density of 60 ASD, whereby the copper layer 11 was manufactured. Next, the copper layer 11 was immersed in the anticorrosion solution 70 for about 2 seconds. The anticorrosion solution 70 contained chromic acid as a main component, and the concentration of the chromic acid was 5 g/L.

Next, a chromate treatment was performed on both sides of the copper layer 11 to form a protective layer, whereby the copper foil 10 having a thickness of 6 µm was manufactured.

### Examples 2 to 5 and Comparative Examples 1 to 5

Copper foils were manufactured under the same process conditions as in Example 1, except that the main compositions of each electrolyte solution and the content of each composition were applied as described in Table 1 below, and the thickness of the manufactured copper foil was adjusted.

**[Table 1]**

| Classification | Copper ions (g/L) | Gloss agent #1 (ppm) | Gloss agent #2 (ppm) | PEG (ppm) | Janus Green B (ppm) | Crystal growth regulator (ppm) | Gloss agent: crystal growth regulator (content ratio) | Thickness of copper foil (µm) |
|---|---|---|---|---|---|---|---|---|
| Example 1 | 87 | 2.7 | - | 5 | 5 | 2 | 1.35:1 | 6 |
| Example 2 | 87 | - | 3.27 | 5 | 5 | 1 | 3.27:1 | 6 |
| Example 3 | 87 | 1.5 | - | 5 | 5 | 0.5 | 3:1 | 6 |
| Example 4 | 87 | - | 2 | 5 | 5 | 1 | 2:1 | 6 |
| Example 5 | 87 | 4.7 | - | 5 | 5 | 2 | 2.35:1 | 8 |
| Comparative Example 1 | 87 | 2 | - | 5 | - | - | -¹⁾ | 6 |
| Comparative Example 2 | 87 | - | 2 | 5 | 5 | - | -²⁾ | 8 |
| Comparative Example 3 | 87 | 7 | - | 5 | 5 | 2 | 3.5:1 | 6 |
| Comparative Example 4 | 87 | 0.13 | - | 5 | 5 | 0.1 | 1.3:1 | 6 |
| Comparative Example 5 | 87 | 5 | - | 15 | 5 | 5 | 1:1 | 6 |
| 1),2) -: Crystal growth regulator not contained. | | | | | | | | |

### Experimental Examples

### Experimental Example 1 - Martens hardness

A sample of each of the copper foils prepared in Examples 1 to 5 and Comparative Examples 1 to 5 was provided. The Martens hardness was measured according to the following measurement conditions based on ISO 145777, and the results are shown in Table 2 below.

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers (correction factor: 0.75)
- Temperature: 23 ± 2 °C
- Humidity: 45 ± 5 %R.H.

### Experimental Example 2 - Vickers hardness, plastic hardness, indentation elastic modulus

For each of the copper foil samples prepared in Experimental Example 1, the Vickers hardness, plastic hardness, and indentation elastic modulus were measured under the same measurement conditions as in Experimental Example 1, and the results are shown in Table 2 below.

### Experimental Example 3 - Surface Rigidity Index (SRI)

For the Martens hardness and Vickers hardness measured in Experimental Examples 1 and 2, the surface rigidity index was calculated according to Equation 1 below. The results are shown in Table 2 below. [Equation 1] $SRI = \left(Martens hardness+Vickers hardness\right) / 2$

### Experimental Example 4 - Mechanical Resilience Index (MRI)

For the indentation elastic modulus and plastic hardness measured in Experimental Example 2, the mechanical resilience index was calculated according to Equation 2 below. The results are shown in Table 2 below. [Equation 2] $MRI \left(unit omitted\right) = Indentation elastic modulus / Plastic hardness$

### Experimental Example 5 - Elongation evaluation

For each of the copper foils prepared in Examples 1 to 5 and Comparative Examples 1 to 5, the first elongation was measured at room temperature under the conditions of a length of 50 mm, a width of 12.7 mm, and a speed of 50 mm/min using Instron 6800 equipment according to IPC-TM-650. In addition, after each copper foil was maintained at 130 °C for 10 minutes, the second elongation was measured under the same conditions. The evaluation was performed according to the following criteria, and the results are shown in Table 2 below.
- ⊚: The value of the second elongation is 90% or more of the value of the first elongation.
- △: The value of the second elongation is 80% or more and less than 90% of the value of the first elongation.
- ×: The value of the second elongation is less than 80% of the value of the first elongation.

### Experimental Example 6 - Tensile strength evaluation

For each of the copper foils prepared in Examples 1 to 5 and Comparative Examples 1 to 5, the first tensile strength was measured under the same conditions as in Experimental Example 5. In addition, after each copper foil was maintained at 130 °C for 10 minutes, the second tensile strength was measured under the same conditions. The evaluation was performed according to the following criteria, and the results are shown in Table 2 below.
- ⊚: The value of the second tensile strength is 90% or more of the value of the first tensile strength.
- △: The value of the second tensile strength is 80% or more and less than 90% of the value of the first tensile strength.
- ×: The value of the second tensile strength is less than 80% of the value of the first tensile strength.

### Experimental Example 7 - Fracture evaluation

An active material slurry was applied to each of the copper foils prepared in Examples 1 to 5 and Comparative Examples 1 to 5. The active material slurry was mixed with 2 parts by weight of styrene-butadiene rubber (SBR) and 2 parts by weight of carboxymethyl cellulose (CMC) with respect to 100 parts by weight of graphite. The active material slurry was uniformly applied on the copper foil in a roll-to-roll method and in a Machine Direction (MD) and then dried. The coating amount of the active material slurry was about 16 mg/cm², and the thickness was about 100 µm.

After the active material slurry was dried, a roll press process was performed under the conditions of a roll gap of 6 µm, a speed of 1 m/min, a linear pressure of 1,000 kgf/cm, and a pressure of 2,500 kg, whereby a negative electrode in which an active material layer with a density of about 1.5 g/cm³ was formed was manufactured. For each of the negative electrodes, a metallic lithium foil with a thickness of 0.4 mm was used as a counter electrode (positive electrode). A polypropylene sheet having a thickness of 0.1 mm was used as a separator, and a coin-type half-cell was manufactured by using a solution, in which 1 M of LiPF₆ was dissolved in a solvent containing ethylene carbonate and ethyl methyl carbonate mixed in a volume ratio of 3:7, as an electrolyte solution.

Each of the coin-type half-cells was charged with a constant current of 0.1 C until the voltage reached 0.01 V, and a process of discharging with a constant current of 0.1 C until the voltage reached 1.5 V was performed three times to proceed with a stabilization process of the battery. Next, each of the coin-type half-cells was charged with a constant current of 0.5 C until the voltage reached 0.01 V, and the process of discharging with a constant current of 0.5 C until the voltage reached 1.0 V was performed 500 times. After 500 charge/discharge experiments were performed, whether or not the negative electrode included in the coin-type half-cell was fractured was observed. The evaluation was performed according to the following criteria, and the results are shown in Table 2 below.
- Good: No fracture occurred in the negative electrode.
- Poor: A fracture occurred in the negative electrode.

**[Table 2]**

| Classificati on | Marten s hardne ss (GPa) | Vicker s hardne ss (GPa) | Plastic hardne ss (GPa) | Indentati on elastic modulus (MPa) | SRI ¹⁾ | MRI ²⁾ | Elongati on evaluatio n | Tensile strength evaluati on | Fracture occurren ce evaluatio n |
|---|---|---|---|---|---|---|---|---|---|
| Example 1 | 0.685 | 0.885 | 0.955 | 21.787 | 0.79 | 22.8 1 | ⊚ | ⊚ | Good |
| Example 2 | 0.835 | 1.276 | 1.377 | 18.846 | 1.06 | 13.6 9 | ⊚ | ⊚ | Good |
| Example 3 | 0.634 | 0.789 | 0.852 | 20.982 | 0.71 | 24.6 3 | ⊚ | ⊚ | Good |
| Example 4 | 0.850 | 1.314 | 1.418 | 18.153 | 1.08 | 12.8 0 | ⊚ | ⊚ | Good |
| Example 5 | 0.895 | 1.193 | 1.287 | 27.376 | 1.04 | 21.2 7 | ⊚ | ⊚ | Good |
| Comparati ve Example 1 | 0.505 | 0.604 | 0.652 | 19.167 | 0.55 | 29.4 0 | Δ | × | Poor |
| Comparati ve Example 2 | 0.522 | 0.634 | 0.712 | 22.231 | 0.58 | 31.2 2 | Δ | × | Poor |
| Comparati ve Example 3 | 0.567 | 0.699 | 0.756 | 22.145 | 0.63 | 29.2 9 | Δ | × | Poor |
| Comparati ve Example 4 | 1.056 | 1.322 | 1.534 | 14.231 | 1.19 | 9.28 | × | Δ | Poor |
| Comparati ve Example 5 | 1.156 | 1.763 | 1.823 | 13.123 | 1.46 | 7.20 | × | × | Poor |
| 1) Surface Rigidity Index (SRI): (Martens hardness + Vickers hardness) / 2 | | | | | | | | | |
| 2) Mechanical Resilience Index (MRI): Indentation elastic modulus / Plastic hardness | | | | | | | | | |

According to Tables 1 and 2, the copper foils according to Examples 1 to 5 satisfy the Martens hardness range of 0.6 GPa to 1.0 GPa.

By having a Martens hardness within this range, it was confirmed that appropriate local hardness and mechanical ductility can be balanced on the surface of the copper foil, allowing tensile strength and elongation to be excellently maintained in room-temperature and high-temperature environments, and suppressing the occurrence of fractures or cracks in the copper foil.

A copper foil according to the present disclosure satisfies a Martens hardness of 0.6 GPa to 1.0 GPa. By satisfying the range, mechanical ductility can be secured in a balanced manner along with appropriate local hardness on the surface of the copper foil. As a result, tensile strength and elongation can be excellently maintained in room-temperature and high-temperature environments, and the fracture or crack generation of the copper foil can be suppressed. In addition, it can have a stable strain absorption capability for repetitive mechanical stress that may be generated in a roll pressing or assembly process, so that mechanical stability of an electrode structure can be improved. Further, since interfacial stress dispersion between the copper foil and an active material layer is smoothly performed, the delamination and separation of an active material can be suppressed, so that the cycle characteristics and lifespan of a secondary battery can be improved.

### [Description of Symbols]

- 10:: copper foil
- 11:: copper layer
- 12:: protective layer
- 15:: negative electrode active material layer
- 20:: positive electrode current collector
- 25:: positive electrode active material layer
- 30:: electrolytic bath
- 40:: electrolyte solution
- 50:: positive electrode plate
- 51:: first positive electrode plate
- 52:: second positive electrode plate
- 60:: rotating cathode drum
- 70:: anticorrosion solution
- 100:: negative electrode
- 200:: positive electrode
- 300:: electrolyte
- 400:: separator
- 1000:: secondary battery

## Claims

1. A copper foil, comprising, a copper layer,
wherein the copper foil has a Martens hardness of 0.6 GPa to 1.0 GPa according to measurement conditions below based on ISO 14577:
[Measurement conditions]
- Measurement equipment: HM 2000 (Helmut Fischer)
- Load: 15 mN
- Load increase time and unload time: 10 sec
- Creep holding time: 3 sec
- Indenter type: Vickers.

2. The copper foil according to claim 1, wherein the copper foil comprises one surface and another surface,
wherein a difference between a Martens hardness on one surface of the copper foil and a Martens hardness on the other surface of the copper foil is 0.3 GPa or less.

3. The copper foil according to claim 1 or 2, wherein the copper foil has a Vickers hardness of 0.7 GPa to 1.5 GPa according to the measurement conditions.

4. The copper foil according to any one of the preceding claims, wherein the copper foil has a Surface Rigidity Index (SRI) of 0.7 to 1.1 according to Equation 1 below: [Equation 1] $SRI = \left(Martens hardness+Vickers hardness\right) / 2 .$

5. The copper foil according to any one of the preceding claims, wherein the copper foil has a plastic hardness of 0.9 GPa to 1.5 GPa according to the measurement conditions.

6. The copper foil according to any one of the preceding claims, wherein the copper foil has an indentation elastic modulus of 15 MPa to 30 MPa according to the measurement conditions.

7. The copper foil according to claim 6, wherein the copper foil has a Mechanical Resilience Index (MRI) of 15 to 30 according to Equation 2 below: [Equation 2] $MRI \left(unit omitted\right) = Indentation elastic modulus / Plastic hardness .$

8. The copper foil according to any one of the preceding claims, wherein the copper foil comprises a protective layer formed on at least one surface of the copper layer,
wherein the protective layer comprises at least one of a chromium compound, a silane compound, and a nitrogen compound.

9. An electrode, comprising:
a current collector comprising a copper foil according to any one of the preceding claims; and
an active material layer formed on at least one surface of the current collector.

10. A secondary battery, comprising:
a negative electrode according to claim 9;
a positive electrode;
an electrolyte; and
a separator interposed between the negative electrode and positive electrode.
